# FASCICULE DE BREVET EUROPEEN

(11) **EP 3 980 964 B1**
(45) Date de publication et mention de la délivrance du brevet: **07.01.2026**
(21) Numéro de dépôt: 20740377.5
(22) Date de dépôt: 03.06.2020
(51) Int. Cl.: G06Q 50/06, G06Q 10/04

(54) **DISPOSITIF ET PROCÉDÉ DE GESTION DE LA CONSOMMATION D'ÉNERGIE ÉLECTRIQUE D'UN ENSEMBLE DE VÉHICULES DE TRANSPORT DE PASSAGERS**
VORRICHTUNG UND VERFAHREN ZUR VERWALTUNG DES ELEKTRISCHEN ENERGIEVERBRAUCHS BEI EINER FLOTTE VON PASSAGIERTRANSPORTFAHRZEUGEN
ELECTRICAL ENERGY CONSUMPTION MANAGEMENT DEVICE AND METHOD FOR A FLEET OF PASSENGER TRANSPORT VEHICLES

(30) Priorité: 06.06.2019 FR 1906026
(43) Date de publication de la demande: 13.04.2022
(73) Titulaire: Faiveley Transport Tours, 37700 Saint Pierre des Corps (FR)
(72) Inventeur: AUBIN, Philippe, 37390 Chanceaux sur Choisille (FR); LAMIDE, Fabrice, 37270 Montlouis sur Loire (FR)
(74) Mandataire: Santarelli
(86) Numéro de dépôt international: PCT/FR2020/050947
(87) Numéro de publication internationale: WO 2020/245541

(56) Documents cités:
- FR-A1- 3 011 912
- US-A- 5 104 037
- EKE-ELECTRONICS LTD: "EKE-Trainnet Presentation - COMPLETE VIDEO", YOUTUBE, 20 April 2016 (2016-04-20), pages 1 - 1, XP054980233, Retrieved from the Internet <URL:https://www.youtube.com/watch?v=AJ98-kegSIs> [retrieved on 20200219]
- ANONYMOUS: "EKE - Technology for smarter trains", 12 June 2019 (2019-06-12), pages 1 - 68, XP055669843, Retrieved from the Internet <URL:https://www.eke-electronics.com/images/eke/Brochure/EKE_Trainnet_Brochure.pdf> [retrieved on 20200218]
- BENOÎT ROBYNS ET AL: "Smart grid in railway system", 29 September 2017 (2017-09-29), pages 1 - 21, XP055668934, Retrieved from the Internet <URL:https://www.etip-snet.eu/wp-content/uploads/2017/06/4-The-Conifer-and-Massena-Project-Guillaume-Gazaignes-and-Benoît-Robyns.pdf> [retrieved on 20200214]

## Description

La présente invention concerne un dispositif de gestion de la consommation d'énergie électrique d'un ensemble de véhicules de transport de passagers, tels que des véhicules ferroviaires.

Elle concerne en outre un procédé de gestion de la consommation d'énergie électrique d'un ensemble de véhicules de transport de passagers.

L'invention s'applique en particulier aux flottes de véhicules de transport ferroviaire comme par exemple les trains, les métros, les tramways, les trolleybus, etc., alimentés par un réseau électrique.

Le transport de passagers, et en particulier le transport ferroviaire, est un des plus grands consommateurs d'électricité produite par des centres de production d'énergie et acheminée par un réseau électrique vers les consommateurs d'électricité.

De manière idéale, l'énergie électrique produite par les centres de production d'énergie doit être égale à l'énergie électrique consommée par l'ensemble des consommateurs d'électricité. Pour atteindre cet objectif, des prédictions de consommation d'énergie sont réalisées, par exemple quotidiennement, notamment pour les grands consommateurs d'électricité tel que le secteur du transport, la sidérurgie, etc. En fonction des prédictions, la production d'énergie électrique par les centres de production d'énergie ainsi que la gestion des écarts de consommation par rapport à la consommation prévue, sont planifiées par la compagnie gestionnaire du réseau d'électricité.

Le transport de passagers, et en particulier le transport ferroviaire étant l'un des plus grands consommateurs d'électricité, il existe un besoin d'optimiser les prévisions de consommation d'énergie électrique afin de maîtriser au mieux son impact sur le réseau électrique.

Dans un véhicule de transport de passagers, tel qu'un véhicule ferroviaire, le système de climatisation est l'équipement le plus consommateur d'énergie électrique après le système de traction du véhicule. L'énergie électrique consommée par la climatisation étant variable en fonction des saisons et des variations climatiques ponctuelles, il est parfois difficile de prévoir la consommation d'énergie électrique pour toute une flotte de véhicules. Lorsque la flotte de véhicules consomme une quantité d'énergie supérieure aux prévisions, la compagnie affrétant la flotte est pénalisée par la compagnie gestionnaire du réseau d'électricité, et notamment lorsque la consommation est réalisée pendant des périodes critiques, telles des périodes ayant des pics de consommation.

FR3011912 A1 divulgue un système pour réduire la consommation de véhicules ferroviaires à l'arrêt.

La présente invention a pour but d'améliorer la gestion d'énergie électrique utilisée par une flotte de véhicules, tels que des véhicules ferroviaires, sans pour autant affecter le confort des passagers.

A cet effet, l'invention vise, selon un premier aspect, un dispositif de gestion de la consommation d'énergie électrique d'un ensemble de véhicules de transport de passagers.

Selon l'invention, le dispositif de gestion comporte :
- des moyens de réception pour recevoir un ensemble d'informations de consommation représentatives de l'énergie électrique consommée à un instant donné par les véhicules de l'ensemble,
- des moyens de détermination pour déterminer une consommation globale à un instant donné, à partir de l'ensemble d'informations de consommation reçu, et
- des moyens de génération pour générer un ensemble de commandes destinées respectivement à un sous-ensemble de véhicules sélectionnés parmi les véhicules de l'ensemble en fonction de leur état de service, les commandes étant générées pour modifier le fonctionnement d'au moins un système de climatisation des véhicules du sous-ensemble de façon à réduire la valeur de la consommation globale déterminée à une valeur prédéfinie.

Ainsi, le dispositif de gestion centralise la génération de commandes pour la climatisation de la totalité des véhicules d'une flotte en tenant compte de leur état ou leur situation de service, c'est-à-dire en considérant si le véhicule est en service ou non, et s'il est en service, en considérant s'il est en service passif (en attente, sans passagers à bord, par exemple en mode parking) ou en service actif (avec des passagers à bord).

On considère qu'un véhicule est en service lorsqu'il est sous tension, c'est-à-dire qu'il consomme de l'énergie électrique du réseau électrique, les systèmes à bord étant alimentés par le réseau électrique.

En outre, on considère qu'un véhicule n'est pas en service, lorsqu'il est hors tension, c'est-à-dire qu'il ne consomme pas d'énergie électrique, les équipements à bord n'étant pas alimentés par le réseau électrique.

En effet, les commandes sont générées pour modifier si possible le fonctionnement des systèmes de climatisation de certains véhicules de la flotte de manière à diminuer en temps réel la consommation électrique globale de la flotte jusqu'à une valeur prédéfinie, cette valeur prédéfinie étant établie par la compagnie gestionnaire du réseau électrique.

Les commandes générées par les moyens de génération sont uniquement destinées aux véhicules d'un sous-ensemble de véhicules correspondant aux véhicules éligibles à l'effacement ou susceptibles de réduire leur consommation d'énergie électrique sans impacter les opérations de la flotte.

On notera que, de manière connue, un système de climatisation comporte des moyens de régulation configurés pour maintenir la température d'un habitacle à une température de consigne, que ce soit pour chauffer ou pour refroidir l'habitacle. En général, des capteurs de température mesurent la température de l'habitacle. Cette température mesurée est ensuite comparée à la température de consigne pour activer ou ne pas activer, en fonction du résultat de la comparaison, des actionneurs du système de climatisation, permettant de chauffer ou de refroidir, selon le cas, l'habitacle pour qu'il atteigne la température de consigne.

Par conséquent, les actionneurs (ou contacteurs) du système de climatisation sont activés pendant une durée sur une période de temps correspondant à la période d'activation de l'actionneur. La période de l'actionneur peut être définie comme une période de temps écoulée entre le déclenchement de deux activations consécutives de l'actionneur.

On peut ainsi définir le rapport cyclique d'un actionneur du système de climatisation comme la durée pendant laquelle l'actionneur est activé, en pourcentage de la durée d'une période d'activation de l'actionneur.

Lorsqu'un actionneur du système de climatisation est activé selon un rapport cyclique déterminé, on dit que l'actionneur est activé selon un profil d'activation déterminé.

Par conséquent, modifier le fonctionnement d'un système de climatisation de façon à réduire la consommation d'un véhicule correspond à réduire le profil d'activation de l'actionneur ou à réduire le rapport cyclique de l'activation de l'actionneur. En effet, si la durée pendant laquelle l'actionneur est activé est diminuée, la consommation du système de climatisation, et par conséquent du véhicule, est diminuée.

Ainsi, pour diminuer la consommation d'un ensemble de véhicules, sans pour autant réduire le confort des passagers des véhicules, le profil d'activation des actionneurs du système de climatisation de chaque véhicule de l'ensemble est diminué ou non, en fonction de l'état de service de chaque véhicule.

Selon une caractéristique, le dispositif de gestion comporte en outre des moyens de transmission pour envoyer une requête de réduction de la consommation d'énergie électrique aux véhicules de l'ensemble, les informations de consommation étant reçues en réponse à la transmission de la requête de réduction.

Ainsi, le dispositif de gestion adresse une requête de réduction de la consommation électrique aux véhicules de l'ensemble, par exemple en réponse à une demande de diminution de la consommation ou d'effacement provenant de la compagnie gestionnaire de la production et d'acheminement d'énergie électrique vers le consommateur d'énergie électrique.

Les véhicules de la flotte recevant cette requête adressent des informations de consommation à un instant donné, au dispositif de contrôle, lui permettant de déterminer la consommation globale de la flotte de véhicules à un instant donné.

Dans un mode de réalisation, les informations de consommation proviennent, comme il sera décrit ci-dessous, d'un ensemble de dispositifs de contrôle locaux associés respectivement à un ensemble de systèmes de climatisation à bord des véhicules de la flotte.

En effet, le dispositif de gestion recevant les consommations de chaque véhicule et connaissant l'état de service de chaque véhicule, il peut estimer l'effacement possible pour chaque véhicule de la flotte de véhicules pour atteindre la valeur de consommation électrique prédéfinie. Le dispositif de contrôle génère les commandes correspondantes en conséquence.

Selon une caractéristique, le sous-ensemble de véhicules comporte des véhicules qui sont en service passif ou en service actif.

Ainsi, les véhicules éligibles à l'effacement ou pouvant participer à la réduction de la consommation de la flotte de véhicules sont des véhicules en service, que ce service soit passif (c'est-à-dire que le véhicule est en attente et sans passagers à bord, étant par exemple au parking), ou actif (c'est-à-dire avec des passagers à bord).

Selon une caractéristique, le dispositif de gestion est en outre configuré pour sélectionner les véhicules du sous-ensemble en fonction d'informations relatives à la température d'au moins un habitacle des véhicules.

Ainsi, les véhicules auxquels sont adressés les commandes sont sélectionnés en tenant compte, en plus de l'état de service des véhicules, de la température d'au moins un habitacle des véhicules. Ceci permet de respecter davantage le confort des passagers.

Selon des modes de réalisation, les informations relatives à la température d'au moins un habitacle peuvent comprendre une température mesurée dans ledit au moins un habitacle ou un paramètre indiquant qu'une température de consigne a été atteinte dans ledit au moins un habitacle.

Selon une caractéristique, le système de gestion comporte en outre des moyens d'identification pour identifier parmi le sous-ensemble de véhicules sélectionnés, un premier groupe de véhicules comportant des véhicules en état de service passif et un second groupe de véhicules comportant des véhicules en état de service actif et dans lesquels les informations relatives à la température d'au moins un habitacle indiquent que la température de consigne a été atteinte.

Selon une caractéristique, les moyens de génération sont configurés pour générer un premier groupe de commandes de réduction du profil d'activation du système de climatisation destinées au premier groupe de véhicules de sorte que l'écart entre la température du véhicule et une température de régulation présente une première valeur prédéfinie, et un second groupe de commandes de réduction du profil d'activation du système de climatisation destinées au second groupe de véhicules de sorte que l'écart entre la température du véhicule et une température de régulation présente une seconde valeur prédéfinie, la seconde valeur prédéfinie étant inférieure à la première valeur prédéfinie.

Ainsi, lorsque la température de régulation ou température de consigne est atteinte dans un habitacle d'un véhicule en service actif, c'est-à-dire transportant des passagers, le profil d'activation des actionneurs du système de climatisation peut être diminué de quelques unités pour cent, par exemple de 5%. Autrement dit, le profil d'activation est diminué de façon modérée afin d'obtenir un écart entre la température de l'habitacle et la température de consigne d'une valeur basse, par exemple de l'ordre de 1 à 2 degrés Celsius.

En outre, si le véhicule est en service passif, c'est-à-dire au parking ou à vide, le profil d'activation des actionneurs du système de climatisation peut être diminué de quelques unités pour cent, par exemple entre 20 et 30%. Autrement dit, le profil d'activation est diminué de façon significative afin d'obtenir un écart entre la température de l'habitacle et la température de consigne d'une valeur élevée, par exemple de l'ordre de 5 degrés Celsius.

On notera qu'en réduisant le profil d'activation, le rapport cyclique de la période d'activation des actionneurs du système de climatisation est réduit.

Ainsi, la consommation d'énergie électrique des véhicules du sous-ensemble étant diminuée, la consommation d'énergie électrique de la flotte de véhicules est diminuée.

Selon un mode de réalisation, le dispositif de gestion est placé au sol.

Dans d'autres modes de réalisation, le dispositif de gestion est placé dans un des véhicules de l'ensemble.

Le dispositif de gestion comporte des moyens de communication pour communiquer, non seulement avec les véhicules de l'ensemble, mais également avec des serveurs d'une compagnie gestionnaire de la production et de l'acheminement de l'énergie électrique.

La présente invention concerne, selon un deuxième aspect, un système de gestion de la consommation d'énergie électrique d'un ensemble de véhicules de transport de passagers.

Selon l'invention, le système de gestion comporte un dispositif de gestion conforme à l'invention ainsi que des dispositifs de contrôle locaux associés respectivement à des systèmes de climatisation embarqués dans les véhicules de transport de passagers, chaque dispositif de contrôle local étant configuré pour mesurer et adresser au dispositif de gestion une information de consommation représentative de l'énergie électrique consommée à un instant donné par le système de climatisation associé.

Les dispositifs de contrôle locaux déterminent la consommation d'énergie électrique liée au système de climatisation associé, et adressent la consommation d'énergie électrique déterminée au dispositif de gestion de la consommation d'énergie électrique. Le dispositif de gestion reçoit ainsi des informations de consommation relatives aux véhicules, qui lui permettent de déterminer la consommation globale de la flotte de véhicules.

La présente invention concerne, selon un troisième aspect, un procédé de gestion de la consommation d'énergie électrique d'un ensemble de véhicules de transport de passagers.

Selon l'invention, le procédé de gestion comporte les étapes suivantes mises en œuvre dans un dispositif de gestion :
- réception d'un ensemble d'informations de consommation représentatives de l'énergie électrique consommée à un instant donné par les véhicules de l'ensemble,
- détermination d'une consommation globale à un instant donné, à partir de l'ensemble d'informations de consommation reçu, et
- génération d'un ensemble de commandes destinées respectivement à un sous-ensemble de véhicules sélectionnés parmi les véhicules de l'ensemble en fonction de leur état de service, lesdites commandes étant générées pour modifier le fonctionnement du système de climatisation des véhicules du sous-ensemble, de façon à réduire la valeur de la consommation globale déterminée à une valeur prédéfinie.

Les commandes générées sont destinées aux véhicules du sous-ensemble, ces véhicules correspondant aux véhicules éligibles à l'effacement ou susceptibles de réduire leur consommation d'énergie électrique.

Selon une caractéristique, le procédé de gestion comporte la transmission d'une requête de réduction de la consommation d'énergie électrique aux véhicules de l'ensemble, l'étape de réception de l'ensemble d'informations de consommation étant mise en œuvre en réponse à la transmission de la requête de réduction.

Selon une caractéristique, le sous-ensemble de véhicules sélectionnés comporte des véhicules qui sont en service passif ou en service actif.

Selon une caractéristique, les véhicules du sous-ensemble de véhicules sont sélectionnés en outre en fonction d'informations relatives à la température d'au moins un habitacle des véhicules de l'ensemble.

Selon une caractéristique, le procédé de gestion comporte en outre l'identification parmi le sous-ensemble de véhicules sélectionnés, d'un premier groupe de véhicules comportant des véhicules en état de service passif et un second groupe de véhicules comportant des véhicules en état de service actif et dans lesquels les informations relatives à la température d'au moins un habitacle indiquent que la température de consigne a été atteinte.

Selon une caractéristique, l'étape de génération comporte la génération d'un premier groupe de commandes de réduction du profil d'activation du système de climatisation destinées au premier groupe de véhicules de sorte que l'écart entre la température du véhicule et une température de consigne présente une première valeur prédéfinie, et d'un second groupe de commandes de réduction du profil d'activation du système de climatisation destinées au second groupe de véhicules, de sorte que l'écart entre la température du véhicule et une température de consigne présente une second valeur prédéfinie, la seconde valeur prédéfinie étant inférieure à la première valeur prédéfinie.

La présente invention concerne, selon un quatrième aspect, un ensemble de véhicules de transport de passagers, chaque véhicule comportant au moins un système de climatisation et un dispositif de contrôle local associé, la consommation électrique dudit ensemble de véhicules étant gérée par un dispositif de gestion conforme à l'invention et mettant en œuvre un procédé de gestion conforme à l'invention.

Le procédé de gestion de la consommation d'énergie électrique, le système de gestion de la consommation d'énergie électrique et l'ensemble de véhicules de transport de passagers présentent des caractéristiques et avantages analogues à ceux décrits précédemment en relation avec le dispositif de gestion de la consommation d'énergie électrique.

D'autres particularités et avantages de l'invention apparaîtront encore dans la description ci-après.

Aux dessins annexés, donnés à titre d'exemples non limitatifs :
[Fig. 1] la figure 1 est un schéma illustrant schématiquement le contexte d'utilisation du dispositif de gestion de la consommation d'énergie électrique conforme à un mode de réalisation,
[Fig. 2] la figure 2 illustre des étapes d'un procédé de gestion conforme à un mode de réalisation de l'invention, et
[Fig. 3] la figure 3 illustre schématiquement un dispositif de gestion selon un mode de réalisation.

L'invention trouve une application dans le domaine des véhicules de transport de passagers alimentés par un réseau électrique, en particulier dans les véhicules de transport ferroviaire, qu'ils soient dédiés à parcourir de longues distances ou de courtes distances, tel que des véhicules de transport ferroviaire urbains, comme par exemple des métros et tramways.

L'invention s'applique notamment à une flotte ou ensemble de véhicules de transport de passagers, chaque véhicule comportant au moins un système de climatisation.

En général, un véhicule de transport de passagers de type ferroviaire est équipé de plusieurs systèmes de climatisation. Les conditions climatiques de chaque habitacle du véhicule de transport de passagers sont régulées par un système de climatisation. Par exemple, dans un véhicule ferroviaire, chaque voiture a un système de climatisation régulant ses propres conditions climatiques. Dans d'autres exemples, un même système de climatisation peut réguler les conditions climatiques de plusieurs véhicules.

Dans un souci de simplification, on considère dans ce texte que chaque véhicule de transport de passagers d'une flotte de véhicules comporte un système unique de climatisation. Néanmoins, comme indiqué ci-dessus, un véhicule peut comporter plusieurs systèmes de climatisation. Par exemple, un véhicule pourrait comporter autant de systèmes de climatisation que d'habitacles.

Par conséquent, dans ce qui suit, un système de climatisation d'un véhicule se réfère à un système de climatisation associé à au moins un habitacle du véhicule. En outre, la température d'un véhicule se réfère à la température d'au moins un habitacle du véhicule.

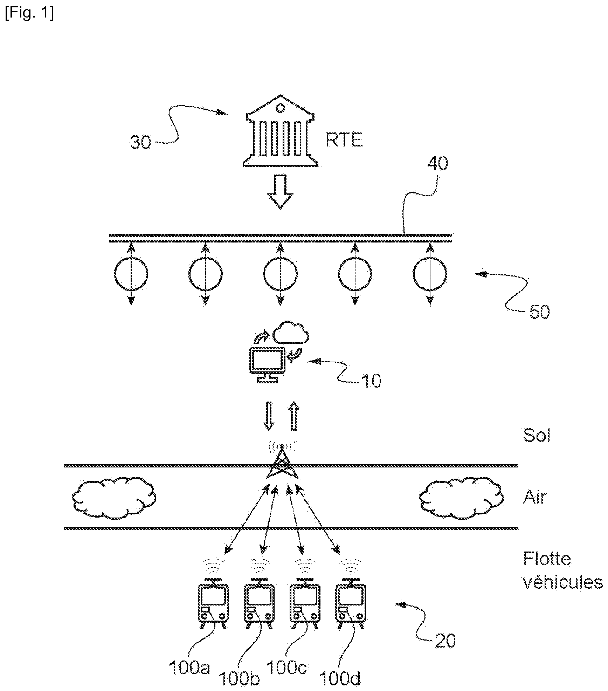

La **figure 1** représente le contexte d'utilisation d'un dispositif de gestion de la consommation d'énergie électrique 10 d'une flotte ou ensemble de véhicules de transport de passagers 20.

Dans le mode de réalisation représenté le dispositif de gestion de la consommation d'énergie électrique 10 est placé au sol. Dans d'autres modes de réalisation, le dispositif de gestion peut être embarqué dans un véhicule de transport de passagers de la flotte de véhicules.

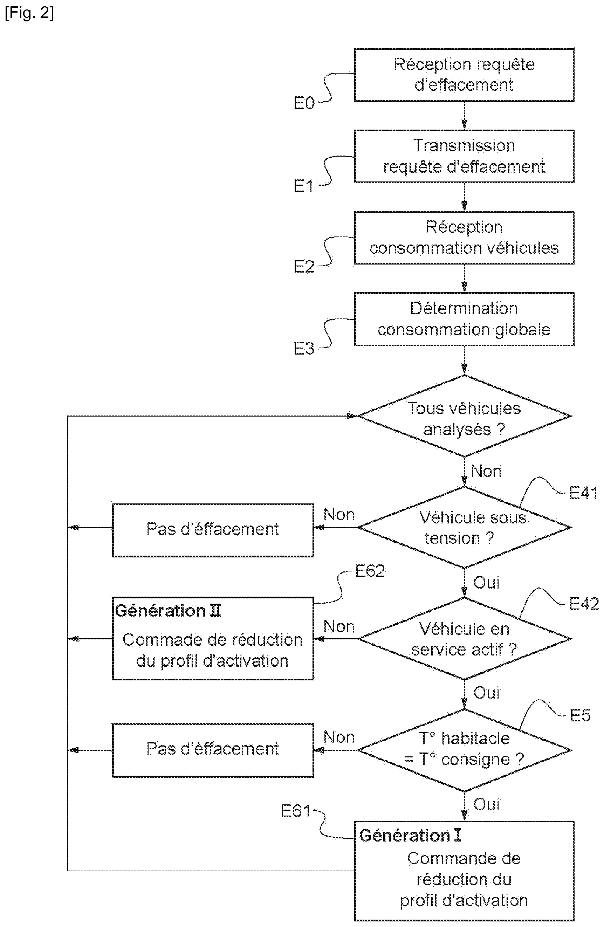

Le dispositif de gestion de la consommation 10 comprend un ou plusieurs serveurs comprenant les moyens nécessaires pour la mise en œuvre du procédé de gestion d'énergie électrique qui sera décrit ci-dessous en référence à la figure 2.

Le dispositif de gestion de la consommation d'énergie électrique 10 comporte des moyens de communication pour communiquer avec des serveurs de la compagnie gestionnaire 30 du réseau d'électricité 40, ainsi qu'avec les véhicules de transport de passagers de la flotte 20.

Dans certaines situations, par exemple lorsque la consommation d'énergie électrique de l'ensemble de consommateurs d'électricité 50 est supérieure aux prévisions pour un moment donné, la compagnie gestionnaire 30 du réseau d'électricité 40 émet une demande de délestage ou d'effacement destinée aux consommateurs d'électricité 50.

En particulier, la compagnie gestionnaire 30 demande à chaque consommateur d'électricité 50 à ce que la consommation d'énergie présente une valeur prédéfinie.

Le dispositif de gestion de la consommation d'énergie électrique 10 recevant cette demande de la part de la compagnie gestionnaire 30, met en œuvre un procédé de gestion de la consommation d'énergie électrique pour mettre en œuvre, si possible, l'effacement demandé.

Dans le cas d'une flotte de véhicules de transport de passagers, la compagnie gestionnaire 30 du réseau d'électricité 40 demande à la compagnie exploitant la flotte de véhicules 20 de réduire la consommation de la flotte à une valeur de consommation prédéfinie.

Dans un mode de réalisation, des dispositifs de contrôle locaux sont placés à bord des véhicules de transport de passagers. Ces dispositifs de contrôle locaux sont associés respectivement à des systèmes de climatisation (non représentés). Chaque dispositif de contrôle locale est configuré pour mesurer la consommation électrique du système de climatisation associé, et l'adresser au dispositif de gestion 10.

Ces dispositifs de contrôle locaux comportent des moyens classiques de mesure de la consommation d'énergie électrique et ne nécessitent pas d'être décrit ici.

Par exemple, la consommation d'énergie électrique est mesurée en surveillant les cycles d'activation des actionneurs (ou contacteurs) du système de climatisation. En effet, la puissance consommée par les actionneurs, tels que les résistances de chauffage, les ventilateurs ou les compresseurs étant connue, la consommation d'énergie électrique est connue en surveillant les cycles d'activation des actionneurs. A titre d'exemple nullement limitatif, une résistance de chauffage d'une puissance nominale de 10 kW avec un cycle d'activation de 30% consomme 3 kW en moyenne lissée.

Dans ce mode de réalisation, le dispositif de gestion de la consommation d'énergie électrique 10 et les dispositifs de contrôle locaux forment un système de gestion de la consommation d'énergie électrique d'un ensemble de véhicules de transport de passagers 20.

La **figure 2** illustre le procédé de gestion de la consommation d'énergie électrique selon un mode de réalisation.

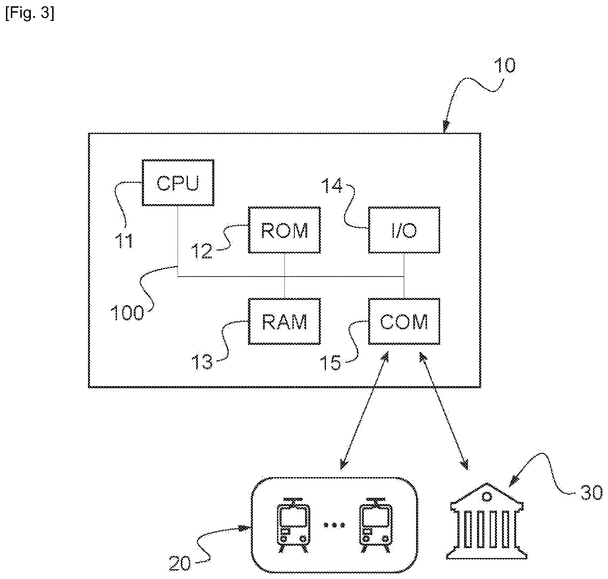

Le procédé de gestion est mis en œuvre au sein du dispositif de gestion 10. Un mode de réalisation du dispositif de gestion 10 sera décrit en référence à la figure 3.

Lorsque le dispositif de gestion 10 reçoit une demande ou requête d'effacement de la part de la compagnie gestionnaire 30 du réseau électrique 40, lors d'une étape de réception E0, il transmet, lors d'une étape de transmission E1, une requête de réduction de la consommation d'énergie électrique aux véhicules de l'ensemble 20.

En réponse, le dispositif de gestion 10 reçoit en provenance des véhicules 20, lors d'une étape de réception E2, un ensemble d'informations de consommation représentatives de l'énergie électrique consommée, à un instant donné, par les véhicules de l'ensemble 20. Le dispositif de gestion 10 connaît ainsi la consommation électrique de chaque véhicule de l'ensemble 20.

Le dispositif de gestion 10 peut ainsi déterminer, lors d'une étape de détermination E3, une consommation globale, à un instant donné, à partir de l'ensemble d'informations de consommation reçu.

Le dispositif de gestion 10 connaissant l'effacement demandé, ou autrement dit, la valeur de consommation prédéfinie demandée par la compagnie gestionnaire 30 du réseau électrique 40, ainsi que la consommation globale de la flotte de véhicules 20, détermine l'effacement à demander à la flotte de véhicules. Comme il sera compris par la description ci-dessous, l'effacement demandé aux véhicules de la flotte 20 dépend de l'état de service des véhicules 20. Ainsi, le dispositif de gestion 10 génère, lors des étapes de génération E61, E62, un ensemble de commandes destinées respectivement à un sous-ensemble de véhicules sélectionnés parmi les véhicules de l'ensemble en fonction de leur état de service des véhicules.

Les commandes générées sont destinées à modifier le fonctionnement du système de climatisation des véhicules du sous-ensemble, de manière à réduire la valeur de la consommation globale déterminée à une valeur de consommation prédéfinie.

On notera que le dispositif de gestion 10 demande seulement de modifier le fonctionnement du système de climatisation des véhicules appartenant au sous-ensemble. La sélection des véhicules formant partie du sous-ensemble sera expliqué ci-dessous.

On entend par modification du fonctionnement du système de climatisation, la modification du profil d'activation ou du temps d'activation des actionneurs du système de climatisation.

Lorsqu'un profil d'activation est réduit, ou que le temps d'activation est réduit, la consommation électrique est réduite.

On notera que lorsque le profil d'activation est réduit, il se peut que la température d'un habitacle du véhicule n'atteigne pas la température de consigne ou que le temps pour l'atteindre soit plus long.

En outre, plus le profil d'activation est réduit, plus l'écart entre la température de l'habitacle et de la température de consigne est élevé.

Selon un mode de réalisation, le dispositif de gestion 10 vérifie quels véhicules de la flotte 20 sont actifs. Autrement dit, pour chaque véhicule de la flotte 20, il vérifie, lors d'une première étape de vérification E41, si le véhicule 20 est en service. En particulier, lors de cette première étape de vérification E41, il est vérifié si le véhicule est sous tension.

Si le véhicule n'est pas sous tension, c'est-à-dire qu'il n'est pas en service, il n'appartient pas au sous-ensemble de véhicules pour lesquels une commande de modification du fonctionnement du système de climatisation est générée.

Si le véhicule est sous tension, ou autrement dit, en service, il appartient au sous-ensemble de véhicules pour lesquels une commande de modification du fonctionnement du système de climatisation est générée. Pour les véhicules appartenant à ce sous-ensemble de véhicules, une deuxième étape de vérification E42 est mise en œuvre, pour vérifier si le véhicule est en état de service passive ou actif.

Comme indiqué ci-dessus, un véhicule de transport de passagers est en service passif s'il se trouve au parking et/ou qu'il ne transporte pas de passagers. Un véhicule de transport de passagers est en service actif lorsqu'il transporte des passagers.

Dans un mode de réalisation, si le véhicule se trouve en service actif, il est vérifié, lors d'une étape de vérification de température E5, si la température d'au moins un habitacle du véhicule a atteint la température de consigne.

On notera que la température de consigne est la température à laquelle ledit au moins un habitacle doit être maintenu par le système de climatisation.

Lorsque la température de l'habitacle n'a pas atteint la température de consigne, c'est-à-dire lorsque la différence entre la température de l'habitacle et la température de consigne est typiquement supérieure ou inférieure à 2 degrés Celsius, le véhicule est exclu du sous-ensemble de véhicules. Autrement dit, les véhicules en service actif dans lesquels la température d'au moins un habitacle n'a pas atteint la température de consigne, n'appartiennent pas au sous-ensemble de véhicules. Cette étape permet d'améliorer le confort des passagers.

En résumé, le sous-ensemble de véhicules comporte les véhicules en service passif ainsi que les véhicules en service actif dans lesquels la température d'au moins un habitacle a atteint la température de consigne ou température de régulation.

Ainsi, parmi le sous-ensemble de véhicules, un premier groupe de véhicules et un second groupe de véhicules sont identifiés par le dispositif de gestion 10. Le premier groupe de véhicules comporte des véhicules en état de service passif et le second groupe de véhicules comporte des véhicules en état de service actif dans lesquels la température d'au moins un habitacle a atteint la température de consigne ou température de régulation.

Les commandes générées, lors des étapes de génération E61, E62, pour les véhicules dans le premier groupe de véhicules sont différentes de celles générées pour le second groupe de véhicules.

Pour l'identification des groupes de véhicules, ou autrement dit, pour déterminer à quel groupe de véhicules appartient chaque véhicule de la flotte 20, le dispositif de gestion 10 reçoit en provenance des véhicules des informations relatives à la température d'au moins un habitacle. Ces informations relatives à la température d'au moins un habitacle peuvent comprendre, selon des modes de réalisation, une température mesurée dans au moins un habitacle du véhicule, ou un paramètre indiquant qu'une température de consigne a été atteinte dans au moins un habitacle du véhicule.

Dans un mode de réalisation, les informations relatives à la température proviennent des dispositifs de contrôle locaux associés respectivement à des systèmes de climatisation embarqués dans les véhicules de transport de passagers 20. Ces dispositifs de contrôle locaux mesurent en temps réel la consommation des systèmes de climatisation et adressent les informations relatives à la température en réponse à la réception d'une requête d'effacement.

Une fois que le dispositif de contrôle 10 détermine si le véhicule appartient au premier ou au second groupe de véhicules, il génère, lors de l'étape de génération E61, E62, une commande de modification du fonctionnement du système de climatisation de manière à réduire la consommation globale de la flotte 20 à la valeur de consommation prédéfinie (cette valeur étant fonction de l'effacement demandé par la compagnie gestionnaire 30 du réseau électrique 40). Autrement dit, il génère une commande de réduction du profil d'activation du système de climatisation.

Si la commande est générée pour un véhicule dans le premier groupe de véhicules, c'est-à-dire que le véhicule est en service passif, la commande de réduction du profil d'activation est générée, lors d'une seconde étape de génération E62, de sorte que l'écart entre la température du véhicule et une température de régulation présente une première valeur prédéfinie. Cette première valeur prédéfinie d'écart présente une valeur relativement élevée, par exemple de l'ordre de 5 degrés Celsius.

Dans certains cas, le profil d'activation est tellement réduit que le système de climatisation est désactivé.

Si la commande est générée pour un véhicule dans le second groupe de véhicules, c'est-à-dire que le véhicule est en service actif et que la température de consigne a été atteinte dans ledit au moins un habitacle du véhicule, la commande de réduction du profil d'activation est générée, lors d'une première étape de génération E61, de sorte que l'écart entre la température du véhicule et une température de régulation présente une seconde valeur prédéfinie. La seconde valeur prédéfinie est inférieure à la première valeur prédéfinie.

Cette seconde valeur prédéfinie d'écart présente une valeur relativement basse, par exemple de l'ordre de 1 à 2 degrés Celsius.

Ainsi, lorsque le véhicule appartient au premier groupe de véhicules la commande est générée de sorte que la réduction du profil d'activation soit importante. Au contraire, lorsque le véhicule appartient au second groupe de véhicules, la commande est générée de sorte que la réduction du profil d'activation soit modérée.

On notera que dans certains cas, malgré les commandes de modification du fonctionnement des systèmes de climatisation générées, l'effacement demandé par la compagnie gestionnaire 30 du réseau électrique 40 n'est pas atteint. Néanmoins, une réduction de la consommation de la flotte des véhicules est, dans la majorité des cas, obtenue.

Dans un mode de réalisation, le dispositif de gestion 10 est configuré pour émettre des notifications à la compagnie gestionnaire 30 du réseau électrique 40 pour lui informer de la réussite dans la procédure d'effacement, et/ou du niveau d'effacement obtenu. Bien entendu, si aucun effacement n'est possible, le dispositif de gestion 10 en informe la compagnie gestionnaire 30 du réseau électrique 40.

La **figure 3** représente schématiquement un dispositif de gestion 10 de la consommation d'énergie électrique selon un mode de réalisation de l'invention.

Le dispositif de gestion 10 de la consommation d'énergie électrique est par exemple un ou plusieurs serveurs incorporant les moyens nécessaires pour mettre en œuvre le procédé de gestion de la consommation d'une flotte de véhicules 20 conforme à l'invention.

Le dispositif de gestion 10 comprend un bus de communication 100 auquel sont reliées :
- une unité de traitement 11, nommée sur la figure CPU (pour « Central Processing Unit ») et pouvant comporter un ou plusieurs processeurs ;
- une mémoire non volatile 12, par exemple ROM (pour « Read Only Memory »), EEPROM (pour « Electrically Erasable Read Only Memory ») ou une mémoire Flash ;
- une mémoire vive 13 ou RAM (pour « Random Access Memory ») ;
- une interface 14 d'entrée/sortie, nommée sur la figure I/O (pour « Input/Output »), par exemple un écran, un clavier, une souris ou un autre dispositif de pointage tel qu'un écran tactile ou une télécommande permettant à un utilisateur d'interagir avec le dispositif de gestion via une interface graphique ; et
- une interface de communication ou moyens de communication 15, nommée COM sur la figure, adaptée à communiquer, via un réseau, avec des serveurs de la compagnie gestionnaire 30 du réseau électrique 40 et avec les véhicules de transport de passagers de la flotte 20.

Selon un mode de réalisation, les moyens de communication 15 du dispositif de gestion 10 comportent des moyens de réception de donnés provenant de la compagnie gestionnaire 30 du réseau électrique 40 et des véhicules de transport de passagers. Ces données peuvent être par exemple des informations de consommation représentatives de l'énergie électrique consommée par les véhicules de l'ensemble, des requêtes d'effacement provenant de la compagnie gestionnaire 30 du réseau électrique 40, ou des informations relatives à la température d'au moins un habitacle du véhicule.

En outre, les moyens de communication 15 du dispositif de gestion 10 comportent des moyens de transmission pour envoyer une requête de réduction de la consommation d'énergie électrique destinée aux véhicules de l'ensemble.

La mémoire vive 13 comprend des registres adaptés à l'enregistrement des variables et paramètres créés et modifiés au cours de l'exécution d'un programme informatique comprenant des instructions pour la mise en œuvre d'un procédé de gestion selon l'invention. Les codes d'instructions du programme stocké en mémoire non-volatile 12 sont chargés en mémoire RAM 13 en vue d'être exécutés par l'unité de traitement CPU 11.

La mémoire non-volatile 12 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre du procédé de gestion.

Le dispositif de gestion de la consommation d'énergie électrique 10 comporte en outre des moyens de détermination configurés pour déterminer une consommation globale à un instant donné, à partir de l'ensemble d'informations de consommation reçu, et des moyens de génération configurés pour générer un ensemble de commandes destinées respectivement à un sous-ensemble de véhicules sélectionnés parmi les véhicules de l'ensemble 20.

Le dispositif de gestion 10 comporte en outre des moyens de sélection des véhicules parmi les véhicules de la flotte 20, en fonction de leur état de service et/ou en fonction d'informations relatives à la température d'au moins un habitacle.

En outre, le dispositif de gestion 10 comporte des moyens d'identification configurés pour identifier parmi le sous-ensemble de véhicules sélectionnés, un premier groupe de véhicules comportant des véhicules en état de service passif et un second groupe de véhicules comportant des véhicules en état de service actif et dans lesquels la température d'au moins un habitacle a atteint la température de consigne.

Selon un mode de réalisation, les moyens de génération sont configurés pour générer un premier et un second groupe de commandes de réduction du profil d'activation. Les commandes de chaque groupe sont générées en fonction du groupe de véhicules auquel les commandes sont destinées.

Ainsi, les moyens de génération sont configurés pour générer un premier groupe de commandes de réduction du profil d'activation du système de climatisation destinées au premier groupe de véhicules de sorte que l'écart entre la température du véhicule et une température de régulation présente une première valeur prédéfinie, et un second groupe de commandes de réduction du profil d'activation du système de climatisation destinées au second groupe de véhicules de sorte que l'écart entre la température du véhicule et une température de régulation présente une seconde valeur prédéfinie, la seconde valeur prédéfinie étant inférieure à la première valeur prédéfinie.

Ainsi, grâce aux moyens décrit ci-dessus, le dispositif de gestion 10 peut mettre en œuvre le procédé de gestion de la consommation d'énergie électrique. En mettant en œuvre ce procédé, le système de climatisation de la totalité des véhicules d'une flotte est commandé en tenant compte de l'état ou la situation de service des véhicules, de manière à diminuer en temps réel la consommation électrique globale de la flotte en réponse à une requête d'effacement provenant de la compagnie gestionnaire du réseau électrique.

## Revendications

1. Dispositif de gestion de la consommation d'énergie électrique d'un ensemble de véhicules de transport de passagers (20), ledit dispositif de gestion (10) étant **caractérisé en ce qu'**il comporte :
- des moyens de réception (15) pour recevoir un ensemble d'informations de consommation représentatives de l'énergie électrique consommée à un instant donné par les véhicules de l'ensemble (20),
- des moyens de détermination (11) pour déterminer une consommation globale à un instant donné, à partir de l'ensemble d'informations de consommation reçu, et
- des moyens de génération (11) pour générer un ensemble de commandes destinées respectivement à un sous-ensemble de véhicules sélectionnés parmi les véhicules de l'ensemble (20) en fonction de leur état de service, lesdites commandes étant générées pour modifier le fonctionnement d'au moins un système de climatisation des véhicules du sous-ensemble de façon à réduire la valeur de la consommation globale déterminée à une valeur prédéfinie.

2. Dispositif de gestion conforme à la revendication 1, **caractérisé en ce qu'**il comporte en outre des moyens de transmission (15) pour envoyer une requête de réduction de la consommation d'énergie électrique aux véhicules de l'ensemble (20), les informations de consommation étant reçues en réponse à la transmission de ladite requête de réduction.

3. Dispositif de gestion conforme à l'une des revendications 1 ou 2, **caractérisé en ce que** le sous-ensemble de véhicules sélectionnés comporte des véhicules en service passif ou en service actif.

4. Dispositif de gestion conforme à l'une des revendications 1 à 3, **caractérisé en ce qu'**il et configuré en outre pour sélectionner les véhicules dudit sous-ensemble de véhicules en fonction d'informations relatives à la température d'au moins un habitacle des véhicules.

5. Dispositif de gestion conforme à la revendication 4, **caractérisé en ce qu'**il comporte en outre des moyens d'identification (11) pour identifier parmi le sous-ensemble de véhicules sélectionnés, un premier groupe de véhicules comportant des véhicules en état de service passif et un second groupe de véhicules comportant des véhicules en état de service actif et dans lesquels les informations relatives à la température d'au moins un habitacle indiquent que la température de consigne a été atteinte.

6. Dispositif de gestion conforme à la revendication 5, **caractérisé en ce que** lesdits moyens de génération (11) sont configurés pour générer un premier groupe de commandes de réduction du profil d'activation du système de climatisation destinées au premier groupe de véhicules de sorte que l'écart entre la température du véhicule et une température de consigne présente une première valeur prédéfinie, et un second groupe de commandes de réduction du profil d'activation du système de climatisation destinées au second groupe de véhicules de sorte que l'écart entre la température du véhicule et une température de consigne présente une seconde valeur prédéfinie, la seconde valeur prédéfinie étant inférieure à la première valeur prédéfinie.

7. Dispositif de gestion conforme à l'une des revendications 4 à 6, **caractérisé en ce que** lesdites informations relatives à la température d'au moins un habitacle comprennent une température mesurée dans ledit au moins un habitacle ou un paramètre indiquant qu'une température de consigne a été atteinte dans ledit au moins un habitacle.

8. Dispositif de gestion conforme à l'une des revendications précédentes, **caractérisé en ce qu'**il est placé au sol.

9. Système de gestion de la consommation d'énergie électrique d'un ensemble de véhicules de transport de passagers (20), **caractérisé en ce qu'**il comporte un dispositif de gestion conforme à l'une des revendications 1 à 8 ainsi que des dispositifs de contrôle locaux associés respectivement à des systèmes de climatisation embarqués dans les véhicules de transport de passagers (20), chaque dispositif de contrôle local étant configuré pour mesurer et adresser au dispositif de gestion (10) une information de consommation représentative de l'énergie électrique consommée à un instant donné par le système de climatisation associé.

10. Procédé de gestion de la consommation d'énergie électrique d'un ensemble de véhicules de transport de passagers (20), ledit procédé de gestion étant **caractérisé en ce qu'**il comporte les étapes suivantes mises en œuvre dans un dispositif de gestion (10) :
- réception (E2) d'un ensemble d'informations de consommation représentatives de l'énergie électrique consommée à un instant donné par les véhicules de l'ensemble (20),
- détermination (E3) d'une consommation globale à un instant donné, à partir de l'ensemble d'informations de consommation reçu, et
- génération (E61, E62) d'un ensemble de commandes destinées respectivement à un sous-ensemble de véhicules sélectionnés parmi les véhicules de l'ensemble (20) en fonction de leur état de service, lesdites commandes étant générées pour modifier le fonctionnement du système de climatisation des véhicules du sous-ensemble, de manière à réduire la valeur de la consommation globale déterminée à une valeur prédéfinie.

11. Procédé de gestion conforme à la revendication 10, **caractérisé en ce qu'**il comporte la transmission (E1) d'une requête de réduction de la consommation d'énergie électrique aux véhicules de l'ensemble, l'étape de réception (E2) de l'ensemble d'informations de consommation étant mise en œuvre en réponse à ladite transmission (E1) de ladite requête de réduction.

12. Procédé de gestion conforme à l'une des revendications 10 ou 11, **caractérisé en ce que** les véhicules du sous-ensemble sont sélectionnés si le véhicule est en service passif ou en service actif.

13. Procédé de gestion conforme à l'une des revendications 10 à 12, **caractérisé en ce que** les véhicules du sous-ensemble de véhicules sont sélectionnés en outre en fonction d'informations relatives à la température d'au moins un habitacle des véhicules de l'ensemble.

14. Procédé de gestion conforme à la revendication 13, **caractérisé en ce qu'**il comporte en outre l'identification (E41, E42, E5) parmi le sous-ensemble de véhicules sélectionnés, d'un premier groupe de véhicules comportant des véhicules en état de service passif et d'un second groupe de véhicules comportant des véhicules en état de service actif et dans lesquels les informations relatives à la température d'au moins un habitacle indiquent que la température de consigne a été atteinte.

15. Procédé de gestion conforme à la revendication 14, **caractérisé en ce que** ladite étape de génération (E61, E62) comporte la génération d'un premier groupe de commandes de réduction du profil d'activation du système de climatisation destinées au premier groupe de véhicules de sorte que l'écart entre la température du véhicule et une température de consigne présente une première valeur prédéfinie, et d'un second groupe de commandes de réduction du profil d'activation du système de climatisation destinées au second groupe de véhicules de sorte que l'écart entre la température du véhicule et une température de consigne présente une seconde valeur prédéfinie, la seconde valeur prédéfinie étant inférieure à la première valeur prédéfinie.

16. Procédé de gestion conforme à l'une des revendications 13 à 15, **caractérisé en ce que** lesdites informations relatives à la température d'au moins un habitacle comprennent une température mesurée dans au moins un habitacle des véhicules de l'ensemble (20), ou un paramètre indiquant qu'une température de consigne a été atteinte dans au moins un habitacle des véhicules de l'ensemble (20).

17. Ensemble de véhicules de transport de passagers **caractérisé en ce que** chaque véhicule comporte au moins un système de climatisation et un dispositif de contrôle local associé, et **en ce que** la consommation électrique dudit ensemble de véhicules est gérée par un dispositif de gestion (10) conforme à l'une des revendications 1 à 8 mettant en œuvre un procédé de gestion conforme à l'une des revendications 10 à 16.

## Patentansprüche

1. Verwaltungsvorrichtung des elektrischen Energieverbrauchs einer Gruppe von Personenbeförderungsfahrzeugen (20), wobei die Verwaltungsvorrichtung (10) **dadurch gekennzeichnet ist, dass** sie Folgendes aufweist:
- Empfangsmittel (15), zum Empfangen einer Gruppe von Verbrauchsinformationen, die repräsentativ für die zu einem bestimmten Zeitpunkt von den Fahrzeugen der Gruppe (20) verbrauchte elektrische Energie sind,
- Bestimmungsmittel (11) zum Bestimmen eines Gesamtverbrauchs zu einem bestimmten Zeitpunkt aus der empfangenen Menge an Verbrauchsinformationen, und
- Erzeugungsmittel (11) zum Erzeugen einer Gruppe von Befehlen, die jeweils für eine Untergruppe von Fahrzeugen bestimmt sind, die unter den Fahrzeugen der Gruppe (20) in Abhängigkeit von ihrem Betriebszustand ausgewählt sind, wobei die Befehle zum Ändern des Betriebs mindestens eines Klimatisierungssystems der Fahrzeuge der Untergruppe erzeugt werden, so dass der Wert des bestimmten Gesamtverbrauchs auf einen vordefinierten Wert reduziert wird.

2. Verwaltungsvorrichtung nach Anspruch 1, **dadurch gekennzeichnet, dass** sie ferner Übertragungsmittel (15) aufweist, um eine Anforderung zur Reduzierung des elektrischen Energieverbrauchs an die Fahrzeuge der Gruppe (20) zu senden, wobei die Verbrauchsinformationen als Antwort auf die Übertragung der Anforderung zur Reduzierung empfangen werden.

3. Verwaltungsvorrichtung nach einem der Ansprüche 1 oder 2, **dadurch gekennzeichnet, dass** die ausgewählte Untergruppe von Fahrzeugen Fahrzeuge im passiven Betrieb oder im aktiven Betrieb aufweist.

4. Verwaltungsvorrichtung nach einem der Ansprüche 1 bis 3, **dadurch gekennzeichnet, dass** sie ferner so eingerichtet ist, dass sie die Fahrzeuge der Untergruppe von Fahrzeugen in Abhängigkeit von Informationen über die Temperatur mindestens eines Innenraums der Fahrzeuge auswählt.

5. Verwaltungsvorrichtung nach Anspruch 4, **dadurch gekennzeichnet, dass** sie ferner Identifikationsmittel (11) umfasst, um aus der Untergruppe ausgewählter Fahrzeuge eine erste Fahrzeuggruppe mit Fahrzeugen im passiven Betriebszustand und eine zweite Fahrzeuggruppe mit Fahrzeugen im aktiven Betriebszustand zu identifizieren und wobei die Informationen über die Temperatur mindestens eines Innenraums anzeigen, dass die Solltemperatur erreicht wurde.

6. Verwaltungsvorrichtung nach Anspruch 5, **dadurch gekennzeichnet, dass** die Erzeugungsmittel (11) so eingerichtet sind, dass sie eine erste Gruppe von Befehlen zur Reduzierung des Aktivierungsprofils des Klimatisierungssystems erzeugen, die für die erste Fahrzeuggruppe bestimmt sind, so dass die Abweichung zwischen der Fahrzeugtemperatur und einer Solltemperatur einen ersten vordefinierten Wert besitzt, und eine zweite Gruppe von Befehlen zur Reduzierung des Aktivierungsprofils des Klimatisierungssystems für die zweite Fahrzeuggruppe, so dass die Abweichung zwischen der Fahrzeugtemperatur und einer Solltemperatur einen zweiten vordefinierten Wert besitzt, wobei der zweite vordefinierte Wert kleiner ist als der erste vordefinierte Wert.

7. Verwaltungsvorrichtung nach einem der Ansprüche 4 bis 6, **dadurch gekennzeichnet, dass** die Informationen über die Temperatur mindestens eines Innenraums eine in dem mindestens einen Innenraum gemessene Temperatur oder einen Parameter umfassen, der angibt, dass in dem mindestens einen Innenraum eine Solltemperatur erreicht wurde.

8. Verwaltungsvorrichtung nach einem der vorhergehenden Ansprüche, **dadurch gekennzeichnet, dass** sie auf dem Boden platziert ist.

9. Verwaltungssystem des elektrischen Energieverbrauchs einer Gruppe von Personenbeförderungsfahrzeugen (20), **dadurch gekennzeichnet, dass** es eine Verwaltungsvorrichtung nach einem der Ansprüche 1 bis 8 sowie lokale Steuervorrichtungen aufweist, die jeweils mit Klimatisierungssystemen in den Personenbeförderungsfahrzeugen (20) verbunden sind, wobei jede lokale Steuervorrichtung so eingerichtet ist, dass sie eine Verbrauchsinformation misst und an die Verwaltungsvorrichtung (10) übermittelt, die für die zu einem bestimmten Zeitpunkt von dem zugehörigen Klimatisierungssystem verbrauchte elektrische Energie repräsentativ ist.

10. Verwaltungsverfahren des elektrischen Energieverbrauchs einer Gruppe von Personenbeförderungsfahrzeugen (20), wobei das Verwaltungsverfahren **dadurch gekennzeichnet ist, dass** es die folgenden Schritte aufweist, die in einer Verwaltungsvorrichtung (10) implementiert sind:
- Empfangen (E2) einer Gruppe von Verbrauchsinformationen, die repräsentativ für die zu einem bestimmten Zeitpunkt von den Fahrzeugen der Gruppe (20) verbrauchte elektrische Energie sind,
- Bestimmen (E3) eines Gesamtverbrauchs zu einem bestimmten Zeitpunkt aus der Gruppe der empfangenen Verbrauchsinformationen, und
- Erzeugen (E61, E62) einer Gruppe von Befehlen, die jeweils für eine Untergruppe von Fahrzeugen bestimmt sind, die gemäß ihrem Betriebszustand aus den Fahrzeugen der Gruppe (20) ausgewählt sind, wobei die Befehle erzeugt werden, um den Betrieb des Klimatisierungssystems der Fahrzeuge der Untergruppe zu ändern, so dass der Wert des bestimmten Gesamtverbrauchs auf einen vordefinierten Wert reduziert wird.

11. Verwaltungsverfahren nach Anspruch 10, **dadurch gekennzeichnet, dass** es das Übertragen (E1) einer Anforderung zur Reduzierung des elektrischen Energieverbrauchs an die Fahrzeuge der Gruppe aufweist, wobei der Empfangsschritt (E2) der Gruppe von Verbrauchsinformationen als Antwort auf das Übertragen (E1) der Anforderung auf Reduzierung umgesetzt wird.

12. Verwaltungsverfahren nach einem der Ansprüche 10 oder 11, **dadurch gekennzeichnet, dass** die Fahrzeuge der Untergruppe ausgewählt werden, wenn sich das Fahrzeug im passiven oder im aktiven Betrieb befindet.

13. Verwaltungsverfahren nach einem der Ansprüche 10 bis 12, **dadurch gekennzeichnet, dass** die Fahrzeuge der Untergruppe von Fahrzeugen ferner auf der Grundlage von Informationen über die Temperatur mindestens eines Innenraums der Fahrzeuge der Gruppe ausgewählt werden.

14. Verwaltungsverfahren nach Anspruch 13, **dadurch gekennzeichnet, dass** es ferner die Identifizierung (E41, E42, E5) unter der Untergruppe ausgewählter Fahrzeuge einer ersten Fahrzeuggruppe mit Fahrzeugen im passiven Betriebszustand und einer zweiten Fahrzeuggruppe mit Fahrzeugen im aktiven Betriebszustand aufweist und, wobei die Informationen über die Temperatur mindestens eines Innenraums anzeigen, dass die Solltemperatur erreicht wurde.

15. Verwaltungsverfahren nach Anspruch 14, **dadurch gekennzeichnet, dass** der Erzeugungsschritt (E61, E62) das Erzeugen einer ersten Gruppe von Befehlen zur Reduzierung des Aktivierungsprofils des Klimatisierungssystems für die erste Fahrzeuggruppe aufweist, so dass die Abweichung zwischen der Fahrzeugtemperatur und einer Solltemperatur einen ersten vordefinierten Wert besitzt, und einer zweiten Gruppe von Befehlen zur Reduzierung des Aktivierungsprofils des Klimatisierungssystems für die zweite Fahrzeuggruppe, so dass die Abweichung zwischen der Fahrzeugtemperatur und einer Solltemperatur einen zweiten vordefinierten Wert besitzt, wobei der zweite vordefinierte Wert kleiner ist als der erste vordefinierte Wert.

16. Verwaltungsverfahren nach einem der Ansprüche 13 bis 15, **dadurch gekennzeichnet, dass** die Informationen über die Temperatur mindestens eines Innenraums eine in mindestens einem Innenraum der Fahrzeuge der Gruppe (20) gemessene Temperatur oder einen Parameter umfassen, der angibt, dass in mindestens einem Innenraum der Fahrzeuge der Gruppe (20) eine Solltemperatur erreicht wurde.

17. Gruppe von Personenbeförderungsfahrzeugen, **dadurch gekennzeichnet, dass** jedes Fahrzeug mindestens ein Klimatisierungssystem und eine zugehörige lokale Steuervorrichtung aufweist, und dass der Stromverbrauch der Gruppe von Fahrzeugen durch eine Verwaltungsvorrichtung (10) nach einem der Ansprüche 1 bis 8 verwaltet wird, die ein Verwaltungsverfahren nach einem der Ansprüche 10 bis 16 umsetzt.

## Claims

1. Management device for managing the electrical energy consumption of a set of passenger transport vehicles (20), said management device (10) being **characterized in that** it comprises:
- reception means (15) for receiving a set of consumption information representing the electrical energy consumed at a given instant by the vehicles of the set (20),
- determining means (11) for determining an overall consumption at a given instant, from the set of consumption information received, and
- generation means for (11) generating a set of commands respectively provided for a subset of vehicles selected from the set of vehicles (20) according to their state of use, said commands being generated to modify the operation of at least one air conditioning system of the vehicles of the subset so as to reduce the value of the determined overall consumption to a predefined value.

2. Management device according to claim 1, **characterized in that** it further comprises transmission means (15) for sending a request for reduction of the electrical energy consumption to the vehicles of the set (20), the consumption information being received in response to the transmission of said reduction request.

3. Management device according to one of claims 1 or 2, **characterized in that** the selected subset of vehicles comprises vehicles in passive use or in active use.

4. Management device according to one of claims 1 to 3, **characterized in that** It is furthermore configured to select the vehicles of said subset of vehicles according to information on the temperature of at least one cabin of the vehicles.

5. Management device according to claim 4, **characterized in that** it further comprises identification means (11)for identifying, from among the subset of selected vehicles, a first group of vehicles comprising vehicles in a passive state of use and a second group of vehicles comprising vehicles in an active state of use and in which the information on the temperature of at least one cabin indicates that the setpoint temperature has been reached.

6. Management device according to claim 5, **characterized in that** said generation means (11) are configured to generate a first group of commands for reduction of the activation profile of the air conditioning system provided for the first group of vehicles such that the gap between the temperature of the vehicle and a setpoint temperature has a first predefined value, and a second group of commands for reduction of the activation profile of the air conditioning system provided for the second group of vehicles, such that the gap between the temperature of the vehicle and a setpoint temperature has a second predefined value, the second predefined value being less than the first predefined value.

7. Management device according to one of claims 4 to 6, **characterized in that** said information on the temperature of at least one cabin comprises a temperature measured in said at least one cabin or a parameter indicating that a setpoint temperature has been reached in said at least one cabin.

8. Management device according to one of the preceding claims, **characterized in that** it is placed on the ground.

9. Management system for managing the electrical energy consumption of a set of passenger transport vehicles (20), **characterized in that**: it comprises a management device according to one of claims 1 to 8 as well as local control devices respectively associated with air conditioning systems on board the passenger transport vehicles (20), each local control device being configured to measure and send consumption information to the management device (10) that represents the electrical energy consumed at a given instant by the associated air conditioning system.

10. Management method for managing the electrical energy consumption of a set of passenger transport vehicles (20), said management method being **characterized in that** it comprises the following steps implemented in a management device (10):
- receiving (S2) a set of consumption information representing the electrical energy consumed at a given instant by the vehicles of the set (20),
- determining (S3) an overall consumption at a given instant, from the set of consumption information received, and
- generating (S61, S62) a set of commands provided respectively for a subset of vehicles selected from the vehicles of the set (20) according to their state of use, said commands being generated to modify the operation of the air conditioning system of the vehicles of the subset, so as to reduce the determined overall consumption value to a predefined value.

11. Management method according to claim 10, **characterized in that** it comprises transmitting (S1) to the vehicles of the set a request for reducing the electrical energy consumption, the step of receiving (S2) the set of consumption information being implemented in response to said transmission (S1) of said reduction request.

12. Management method according to one of claims 10 or 11, **characterized in that** the vehicles of the subset are selected if the vehicle is in passive use or in active use.

13. Management method according to one of claims 10 to 12, **characterized in that** the vehicles of the subset of vehicles are selected furthermore according to information on the temperature of at least one cabin of the vehicles of the set.

14. Management method according to claim 13, **characterized in that** it further comprises identifying (S41, S42, S5) from among the subset of selected vehicles, a first group of vehicles comprising vehicles in a passive state of use and a second group of vehicles comprising vehicles in an active state of use and in which the information on the temperature of at least one cabin indicates that the setpoint temperature has been reached.

15. Management method according to claim 14, **characterized in that** said generating step (S61, S62) comprises the generation of a first group of commands for reduction of the activation profile of the air conditioning system provided for the first group of vehicles such that the gap between the temperature of the vehicle and a setpoint temperature has a first predefined value, and a second group of commands for reduction of the activation profile of the air conditioning system provided for the second group of vehicles, such that the gap between the temperature of the vehicle and a setpoint temperature has a second predefined value, the second predefined value being less than the first predefined value.

16. Management method according to one of claims 13 to 15, **characterized in that** said information on the temperature of at least one cabin comprises a temperature measured in at least one cabin of the vehicles of the set (20), or a parameter indicating that a setpoint temperature has been reached in at least one cabin of the vehicles of the set (20).

17. Set of passenger transport vehicles, **characterized in that** each vehicle comprises at least one air conditioning system and an associated local control device, and **in that** the electricity consumption of said set of vehicles is managed by a management Device (10) in accordance with one of claims 1 to 8 implementing a management method in accordance with one of claims 10 to 16.
